Europäisches Patentamt

European Patent Office

Office européen des brevets

(19)

(11) Publication number: **0 316 032 B1**

## EUROPEAN PATENT SPECIFICATION

(12)

(45) Date of publication of patent specification: **17.06.92**

(51) Int. Cl.⁵: **B23P  15/00**, B24B 31/116, B29C 45/20, B29C 45/27

(21) Application number: **88202421.9**

(22) Date of filing: **28.10.88**

(54) **Method for arranging a through-channel in a solid body and body obtained with this method.**

(30) Priority: **06.11.87 NL 8702667**

(43) Date of publication of application:
**17.05.89 Bulletin  89/20**

(45) Publication of the grant of the patent:
**17.06.92 Bulletin  92/25**

(84) Designated Contracting States:
**AT BE CH DE FR GB IT LI LU NL SE**

(56) References cited:
EP-A- 0 197 181          WO-A-87/05552
DE-C- 838 710            FR-A- 2 238 569
US-A- 3 039 234          US-A- 4 609 138

(73) Proprietor: **GPT Axxicon B.V.**
**Kanaaldijk z.w. 7B**
**NL-5706 LD Helmond(NL)**

(72) Inventor: **Van Poorten, Antonius**
**Suezlaan 22**
**NL-5752 BG Deurne(NL)**

(74) Representative: **Schumann, Bernard Herman Johan et al**
**OCTROOIBUREAU ARNOLD & SIEDSMA**
**Sweelinckplein 1**
**NL-2517 GK The Hague(NL)**

EP 0 316 032 B1

## Description

The invention relates to a method for arranging at least one through-channel in a solid body, said method comprising the steps of:

(1) providing at least two solid blocks which are together sufficiently large to form the body,

(2) if required complementary modelling corresponding side faces of said blocks,

(3) forming a groove in each of said side faces such that said grooves together bound a channel,

(5) coupling said blocks to form a body, e.g. by vacuum-soldering.

The pre-characterising portion of Claim 1 is based on the disclosure of the document EP-A-0 197 181.

An example of a solid body of this type is a hot-runner, that is, a component for use in combination with an injection moulding device, which component comprises at least one channel for passage of heated plastic to the mould cavity of an injection moulding die. A single hot-runner comprises only one channel which is generally straight and which if required may possess a slightly tapering form. Such a channel can be obtained simply by drilling. For injection moulded products with a more complicated structure, the injection moulded product usually has to be manufactured via multiple gates. Use has to be made for this purpose of a hot-runner with one inlet opening which branches into a number of channels which each run out on the other side of the hot-runner. As will be apparent, these channels have to possess a form that is out of straight.

The European patent application EP-A-0 197 181 describes a method of manufacturing an integral manifold for a multicavity injection molding system. The manifold has a melt passage which follows a tortuous path and is formed by milling matching grooves without any sharp bends in opposite surfaces of two plates which are then secured together. The manifold is formed of tool steel and also has an electrical heating element which is cast into a channel in its upper surface. The two plates are brazed together and the heating element is cast in the channel in a common heating step under a partial vacuum in a vacuum furnace.

The French patent application FR-A-2 238 569 relates to a multiple hot-runner consisting of two blocks previously processed and afterwards unified.

A major problem in injection moulding high-quality objects, such as compact discs, video discs, numerical optical discs and the like, is the relatively poor quality of the objects resulting from the rheological shapes of the hot-runners involved. It should be appreciated that the quality of such discs in the context of the invention is mainly related to their optical qualities that are to a substantial degree determining the fault-free operation of such information carriers. As a result of the defective flow properties of prior art multiple hot-runners high-quality information carriers of the types described above cannot be made within the required tolerances.

The invention has for its object to provide a method of the type described above by which a considerable improvement can be achieved in the quality of high grade injection moulded products. It is a purpose of the invention to aim at only the highest possible quality of the objects, particularly in view of their homogeneous composition without local tensions tending to be accompanied by variations of the index of refraction of the transparent material. To this end the method comprises the following characterizing steps:

(6) passing a liquid abrading agent with force through the channel for a certain period of time in order to render said channel a desired rheological shape by means of a honing operation, which honing may be pulsating, determining said period of time by

(7) manufacturing a number of bodies, each with a different time interval,

(8) establishing in which body is the channel which complies best with the required rheological shape,

(9) determining said time interval of that body.

According to the steps (7)-(9), the interval of time during which the liquid abrading agent has to be passed through in the so-called "slurry-honing" can be effected, which is of great importance in determining the required rheological form.

It should be understood that as a result of the passing through of a liquid abrading agent there occurs a gradual abrasion of the wall of the or each channel, whereby at a certain point in time the "ideal" rheological characteristics are obtained.

The above specified step (8) can now be performed by:

(10) dividing the body into blocks in lengthwise direction along a sectional plane of the channel and establishing the form of the thus formed grooves forming the channel in the original body.

In the case where the body to be manufactured is a hot-runner to be used together with an injection moulding device, the above specified step (8) can be performed by:

(11) successively accomodating the hot-runners in the injection moulding device,

(12) manufacturing at least one injection moulded object, for example a compact disc, with each of these hot-runners, and

(13) establishing by means of which hot-runner the best object has been manufactured.

For example in the case of optical information carriers that are manufactured from high grade and very transparent plastic, establishing which of the objects produced is the best can be carried out by determining the optical properties, this being done at a number of places on the formed injection moulded product.

The invention will now be elucidated with reference to a drawing. In the drawing:

Fig. 1 shows an exploded view of a hot-runner in twofold form;

Fig. 2 is a view along the line II-II of a coupling plane of a hot-runner as in fig. 1, with the associated injection nozzles; and

Fig. 3 shows a schematic perspective view of a hot-runner, the channels of which are optimised by means of slurry-honing.

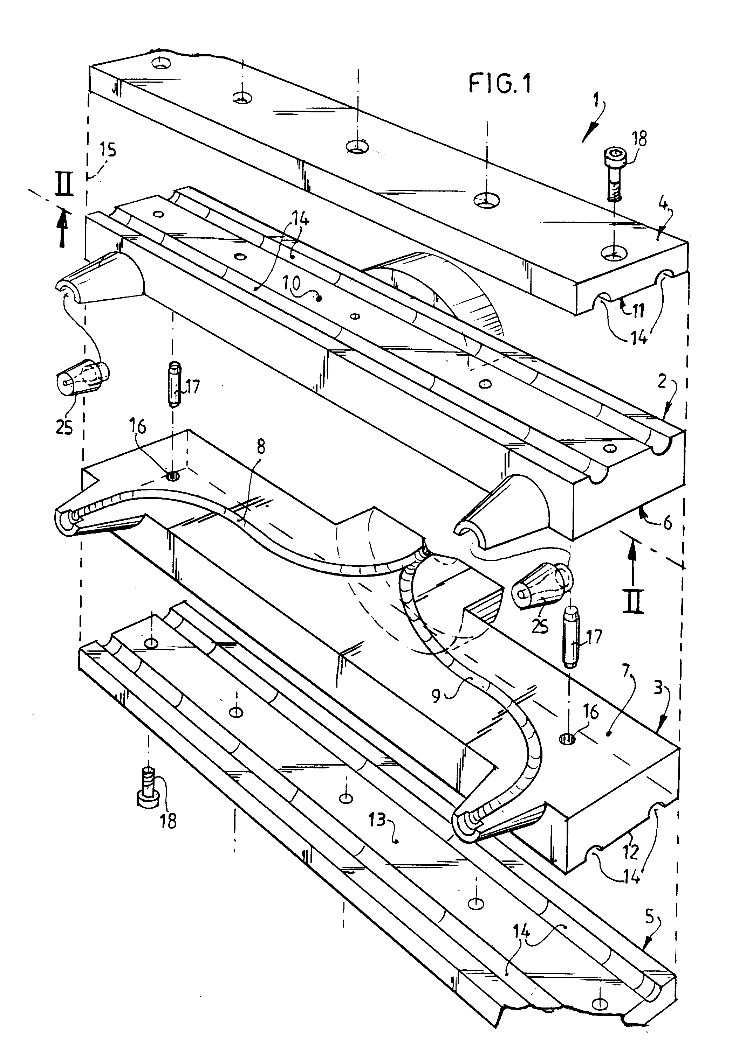

Fig. 1 shows an exploded view of a hot-runner 1. This hot-runner 1 comprises two solid blocks 2, 3 which each consist of two parts, 2, 4; 3, 5 respectively. The solid blocks 2, 3 display in this case surfaces 6, 7 to be set facing each other which are provided with grooves 8, 9 in a milling process. Grooves 8, 9 together form, in the case where the surfaces 6, 7 are placed onto each other, the bounding of through-channels. The second parts 4, 5, together with the respective blocks 2, 3, likewise bound straight channels for the accommodation of heating elements. For this purpose grooves are cut into the surfaces 10, 11 and 12, 13 facing each other, for example by milling, all these grooves being designated with 14 for the sake of convenience.

The hot-runner 1 is assembled from the components in the manner indicated in fig. 1 with broken lines 15. Accurate positioning is obtained by means of holes 16 and positioning pins 17. This ensures the most accurate possible joining of the edges of the grooves 8. Such a precise connection is of importance with respect to the desired accuracy of the streamline form of the channels bounded by the grooves 8, 9.

The blocks 2, 3 consist of a material suitable for a hot-runner, for instance a high quality tool steel. The surfaces 6, 7 are given a plane form with a high degree of precision. The grooves 8, 9 are arranged in the block on the surfaces 6, 7 by a milling process.

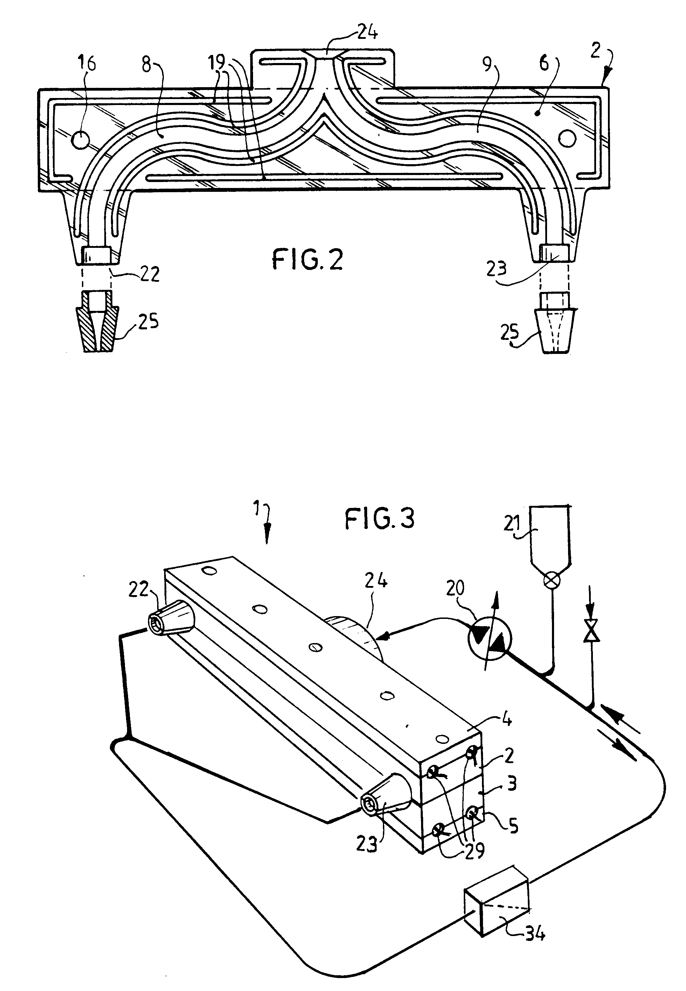

The parts 2, 4 and 3, 5 are connected to each other by means of screws 18 after heating elements 29 have been placed in the channels bounded by grooves 14, as shown in fig. 3.

Fig. 2 shows the smooth surface 6 of the block 2, wherein the grooves 8, 9 are arranged by means of milling. Located on either side of grooves 8, 9 and on the side edges of the surface 6 are vacuum-soldering zones 19. Present in these zones are nickel, copper, beryllium or other suitable metal which, through eddy-current heating in vacuum with the surfaces 6, 7 lying against each other, give an exceptionally strong adhesion between these surfaces 6, 7. The vacuum-soldering technique is generally known and requires no further discussion within the framework of this invention.

The vacuum-solder zones can comprise paste, wire or foil of the relevant material, or also combinations thereof.

After the whole hot-runner 1 has been assembled in the above described manner, an improvement of the streamline form, that is, the rheological characteristics of the channels bounded by the grooves 8, 9, can if required be realized by an arrangement as shown in fig. 3. As in this very schematically drawn disposition a liquid abrading agent, generally denoted as abrasive slurry and originating from a storage tank 21, can be pressed through the channels of hot-runner 1 bounded by the grooves 8, 9 by means of a regularly reversing pump 20.

This per se known honing technique gives, in the context of the invention, the specific advantage that the streamline form of the channels present in a solid body is improved in very simple manner, and as it were automatically.

The outlets 22, 23 of the channels are connected via a filter 34 to the pump 20 which is connected on the other side to the inlet 24. The pulsating action pump 20 pumps for a period to be specifically determined the abrasive slurry with force back and forth through the channels bounded by grooves 8, 9.

After completion of the hot-runner 1 injection nozzles 25 are coupled to the outlets 22, 23. Via these injection nozzles the heated and therefore softened plastic is injected into the mould cavity of the injection moulding die.

The invention offers a method which can be performed in very simple manner for arranging in a solid block channels of which the characteristics can be kept under very close control. A better controlled injection moulded product can therefore be obtained, since the degree of filling and the temperature distribution of the plastic in the mould cavity is better kept under control.

It will be apparent that the invention is not restricted to hot-runners but extends in general to metal blocks with channels, the form of which is determined only with difficulty or not at all by simple processes such as drilling or milling, and the flow characteristics of which are of essential importance.

## Claims

**1.** A method for arranging at least one through-channel in a solid body (1), said method comprising the steps of:

(1) providing at least two solid blocks (2, 3) which are together sufficiently large to form the body,

(2) if required complementary modelling corresponding side faces (6, 7) of said blocks,

(3) forming a groove (8, 9) in each of said side faces (6, 7), which pairs of grooves have corresponding shapes,

(4) placing against each other said side faces (6, 7) such that said grooves (8, 9) together bound a channel,

(5) coupling said blocks (2, 3) to form a body, e.g. by vacuum-soldering,

characterized by

(6) passing a liquid abrading agent with force through the channel for a certain period of time in order to render said channel a desired rheological shape by means of a honing operation, which honing may be pulsating, determining said period of time by

(7) manufacturing a number of bodies, each with a different time interval,

(8) establishing in which body is the channel which complies best with the required rheological shape,

(9) determining said time interval of that body.

2. The method according to claim 1, characterized in that step (8) is performed by:

(10) dividing the body (1) into blocks in lengthwise direction along a sectional plane of the channel and establishing the form of the thus formed grooves forming the channel in the original body.

3. The method according to claim 1, wherein the body (1) is a hot-runner to be used together with an injection moulding device,

characterized in that step (8) is performed by

(11) successively accommodating the hot-runners in the injection moulding device,

(12) manufacturing at least one injection moulded object, e.g. a compact disc, with each of these hot-runners, and

(13) establishing by means of which hot-runner the best object has been manufactured.

**Revendications**

1. Procédé pour former au moins un passage traversant dans un corps massif (1), ce procédé comprenant les phases suivantes:

(1) on réalise au moins deux blocs massifs (2,3) qui sont ensemble suffisamment grands pour former le corps,

(2) si nécessaire, on façonne les faces latérales correspondantes (6,7) desdits blocs de façon complémentaire,

(3) on forme une rainure (8,9) dans chacune desdites faces latérales (6,7), ces paires de rainures ayant des formes correspondantes,

(4) on dispose lesdites faces latérales (6,7) l'une contre l'autre de manière que les rainures (8,9) délimitent ensemble un conduit,

(5) on assemble lesdits blocs (2,3) pour former un corps, par exemple par soudage sous vide;

caractérisé en ce que:

(6) on fait passer un agent abrasif liquide avec force à travers le conduit pendant une certaine période de temps afin de conférer à ce conduit une forme rhéologique désirée, dans une opération de finition intérieure, cette finition pouvant être effectuée par pulsations, en déterminant ladite période de temps :

(7) en fabricant un certain nombre de corps, chacun pendant une période de temps différente,

(8) en déterminant dans quel corps se trouve le conduit qui répond le mieux à la forme rhéologique désirée,

(9) en déterminant ledit intervalle de temps utilisé pour ce corps.

2. Procédé suivant la revendication 1, caractérisé en ce que la phase (8) est effectuée:

(10) en divisant le corps (1) en blocs dans le sens longudinal suivant un plan de coupe du conduit et en établissant la forme des rainures ainsi formées constituant le conduit dans le bloc original.

3. Procédé suivant la revendication 1, dans lequel le corps (1) est un canal de coulée chauffé destiné à être utilisé avec un dispositif de moulage par injection,

caractérisé en ce que la phase (8) est effectuée :

(11) en logeant successivement les canaux de coulée chauffés dans le dispositif de moulage par injection,

(12) en fabriquant au moins un objet moulé par injection, par exemple un disque compact, avec chacune de ces buses de canal chauffé, et

(13) en établissant au moyen de quel canal de coulée chauffé on a fabriqué le meilleur objet.

## Patentansprüche

1. Verfahren zum Anordnen wenigstens eines Durchgangskanales in einem festen Körper (1), wobei das Verfahren die folgenden Schritte umfaßt:

   (1) wenigstens zwei feste Blöcke (2, 3) vorzusehen, die zusammen ausreichend groß sind, um den Körper auszubilden,

   (2) falls erforderlich komplementär entsprechende Seitenflächen (6, 7) der Blöcke auszubilden,

   (3) eine Ausnehmung oder auch Nut (8, 9) in jeder der Seitenflächen (6, 7) auszubilden, wobei die Ausnehmungs- oder auch Nutenpaare einander entsprechende Formen aufweisen,

   (4) die Seitenflächen (6, 7) aneinander anzuordnen, derart, daß die Paare von Ausnehmungen oder auch Nuten (8, 9) zusammen einen Kanal begrenzen,

   (5) die Blöcke (2, 3) kraftschlüssig beispielsweise mittels Vakuum-Löten zum Zwecke der Ausbildung eines Körpers miteinander zu verbinden,

   dadurch gekennzeichnet,

   (6) daß ein flüssiges Abreibungsmittel unter Druck eine gewisse Zeitspanne durch den Kanal durchgeleitet wird, um dem Kanal eine gewünschte rheologische Form mittels Honen bzw. Abschleifen zu verleihen, wobei das Abschleifen oder Honen pulsierend erfolgen kann und die Zeitdauer bestimmt wird durch

   (7) Herstellen einer Anzahl von Körpern, jeden unter einem unterschiedlichen Zeitintervall,

   (8) Feststellen, in welchem Körper sich der Kanal befindet, der am besten mit der gewünschten rheologischen Form übereinstimmt,

   (9) Bestimmen des Zeitintervalles für den Körper.

2. Verfahren nach Anspruch 1, dadurch gekennzeichnet, daß der Schritt (8) ausgeführt wird durch:

   (10) Trennen des Körpers (1) in Blöcke in Längsrichtung längs einer Schnittebene des Kanales und Feststellen der Form der darin ausgebildeten, den Kanal bildenden Ausnehmungen oder Nuten in dem Originalkörper.

3. Verfahren nach Anspruch 1, dadurch gekennzeichnet, daß der Körper (1) ein zusammen mit einer Spritzgußvorrichtung verwendeter Heißläufer ist, dadurch gekennzeichnet,

daß der Schritt (8) durchgeführt wird indem

   (11) nacheinander die Heißläufer in der Spritzgußvorrichtung angeordnet werden,

   (12) wenigstens ein Spritzgußgegenstand, beispielsweise eine Compact-disc mit jedem dieser Heißläufer hergestellt und

   (13) festgestellt wird, mittels welchem Heißläufer der beste Gegenstand hergestellt wurde.

FIG.1

FIG.2

FIG.3